# EUROPEAN PATENT APPLICATION

(11) **EP 4 825 617 A1**
(43) Date of publication of application: **21.10.2026**
(21) Application number: 26315179.7
(22) Date of filing: 31.03.2026
(51) Int. Cl.: B60H 1/00, B60H 1/14

(54) **IMPROVED HEAT MANAGEMENT SYSTEM FOR A VEHICLE**

(30) Priority: 07.04.2025 IT 202500007467
(71) Applicant: IVECO FRANCE S.A.S., 69200 Vénissieux (FR)
(72) Inventor: Gomes, Christophe, 69200 VENISSIEUX (FR)
(74) Representative: Studio Torta S.p.A.

(57) **Abstract**

Heat management system (1) for a vehicle provided with an heat exchanger (2, 3) configured to exchange heat with the air within an internal space of the vehicle (1), the heat management system (1) comprising an operative system heat management portion (40) fluidly connected to exchange heat to at least one heat exchangers (2, 3), wherein the operative system heat management portion (40) comprises at least one operative module, the operative module being at least one among a transmission heat management system (50), a power electronics heat management system (60), a compressed air heat management system (70) and/or an e-axle heat management system (80).

## Description

### CROSS-REFERENCE TO RELATED APPLICATIONS

This patent application claims priority from Italian patent application no. 102025000007467 filed on April 7, 2025, the entire disclosure of which is incorporated herein by reference.

### TECHNICAL FIELD

The present invention concerns a heat management system for a vehicle.

The present invention finds its preferred, although not exclusive, application in at least partial electric traction public transport vehicle. Reference will be made to this application by way of example below.

### BACKGROUND OF THE INVENTION

Public transport vehicles tend to be realized as partial electric traction or purely electric traction vehicles in order to reduce the pollutant emissions due to the use of internal combustion engines.

Hybrid vehicles, electric vehicles or fuel cell vehicles are examples of the above at least partial electric traction vehicles.

Such vehicles use electric energy store in electric battery means in order to allow traction of the vehicle and the operation of different functional system of the vehicle, inter alia the conditioning system.

Conditioning of the interior of a public transport vehicle is a crucial comfort parameter for the travellers and.conditioning system is one of the most energy-consuming system of the vehicle except for the traction system.

Current system uses refrigeration cycle systems that are particularly energy-consuming and that are mainly dedicated to the air conditioning of passengers compartment and driver area. Such refrigeration cycle systems used known chillers that uses, moreover, R134a fluid that will be prohibited in the next years.

Alternatively, electric heaters or even Diesel/HVO (hydro vegetable oils) autonomous heaters are used for heating the internal space in winter.

Clearly, the use of energy-consuming refrigeration cycle systems and electric heaters reduces the operative range of the vehicle since they consume heavily battery vehicle stored energy that cannot be used for traction.

Furthermore, Diesel/HVO autonomous heaters clearly emit pollutant emissions that should be avoided.

Moreover, heating management is also required for over operative systems of the vehicles such as electric batteries or powertrain that needs to be maintained within a pre-set temperature range.

Existing systems are disclosed in IT102023000021294 and IT102023000021276 the disclosures of these latter being incorporated herein by reference.

Therefore, the need is felt to improve existing heat management systems for public transport vehicle in order to provide efficient conditioning of the internal space of the vehicle, of operative system thereof while at the same time reducing the energy consumption in order to increase vehicle efficiency/its operative range of the vehicle.

An aim of the present invention is to satisfy the above-mentioned needs in a cost-effective and optimized manner.

### SUMMARY OF THE INVENTION

The mentioned aim is reached by heat management system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a thermal management system according to the present disclosure;
- Figure 2 is a schematic and enlarged representation of a portion of the thermal management system illustrated in Figure 1.

### DETAILED DESCRIPTION OF THE INVENTION

The attached figure disclose an exemplarily embodiment of a heat management system 1 for a vehicle according to the invention.

The vehicle (not shown) is preferably a public transport vehicle and has at least a partial electric traction. Moreover, the vehicle essentially comprises a plurality of heat exchangers, namely a plurality of first heat exchangers 2, in detail configured to heat the internal space of the vehicle (in the following called "heaters" for simplicity), and at least a second heat exchanger 3, in particular a front heater/cooler, in the following called " heater/cooler" configured to heat or, more commonly cool the internal space of the vehicle.

The heat management system 1 comprises a heat pump assembly 10 provided essentially with a first and a second portions 10', 10''.

As per se known, the first portion 10' is configured to use electrical energy to absorb heat from the environment to vary the temperature in an operative fluid passing through, via known refrigeration cycle apparatus, while the second portion 10'' is configured to allow exchange of heat between the operative fluid of the refrigeration cycle apparatus and a carrier fluid. Such carrier fluid then flows towards the aforementioned heat exchangers 2, 3 in the inner space of the vehicle and may be water.

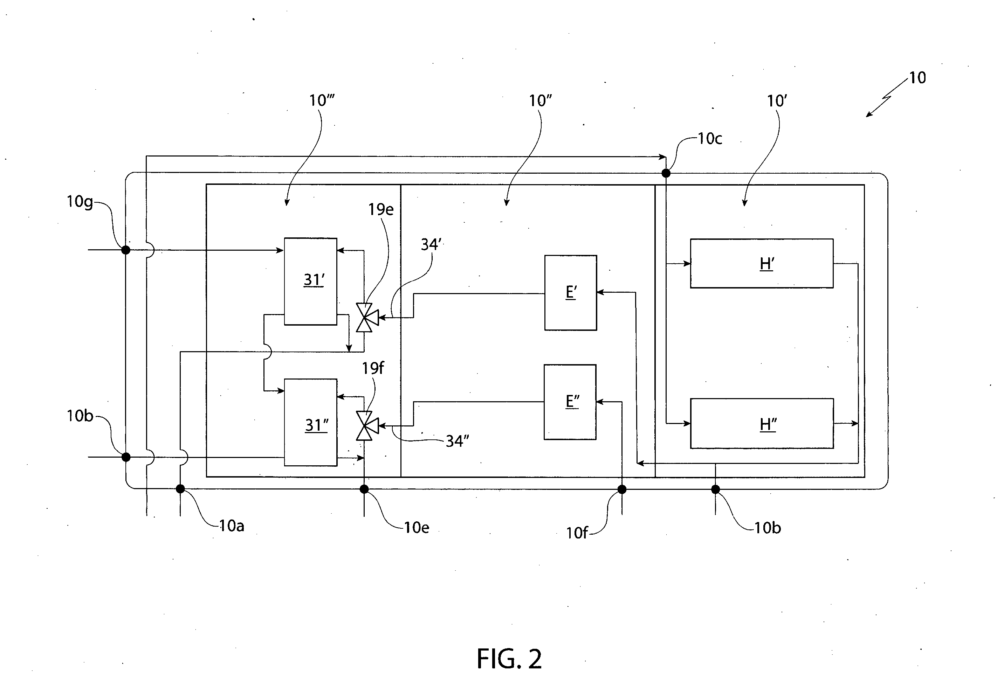

In particular, Figure 2 discloses a schematic representation in greater detail of an embodiment of such heat pump assembly 10.

As said, first portion 10' comprises (not shown) a refrigeration cycle apparatus, well known in the art, and comprising, as known compressor means, a condenser, an expander, an evaporator, cycle-disposed to allow physical transformation of an operative fluid.

In the disclosed example, the refrigeration cycle apparatus operates with CO₂ gas as operative fluid, therefore heat pump assembly 10 is a CO₂ heat pump.

The heat pump assembly 10 defines a first outlet 10a configured to allow the exit of the operative fluid at a first temperature range value, a first inlet 10b configured to allow the entrance of the operative fluid at a second temperature range value, a second inlet 10c configured to allow the entrance of the operative fluid at the aforementioned first temperature range value, a second outlet 10d configured to allow the exit of the operative fluid at the aforementioned second temperature range value, a third outlet 10e configured to allow the exit of the operative fluid at a third temperature range value and a third inlet 10f configured to allow the entrance of the operative fluid at the aforementioned third temperature range value.

In an exemplarily configuration, second portion 10" comprise a first heat exchanger E' configured to allow exchange with the vehicle operative fluid, e.g. water, and the heat pump operative fluid, i.e. the refrigerant. In particular, the first heat exchanger E' is configured to absorb heat from the heat pump operative fluid, therefore e.g. the first heat exchanger E' is placed nearby a condenser of the heat pump assembly.

The first heat exchanger E' is configured to receive the vehicle operative fluid coming from the first inlet 10b, increasing its temperature, and sending to the first outlet 10a.

Second portion 10'' comprise a second heat exchanger E" configured to allow exchange with the vehicle operative fluid, e.g. water, and the heat pump operative fluid, i.e. the refrigerant. In particular, the second heat exchanger E" is configured to provide heat to the heat pump operative fluid, therefore e.g. the second heat exchanger E" is placed nearby an evaporator of the heat pump assembly.

The second heat exchanger E" is configured to receive the vehicle operative fluid coming from the third inlet 10f, decreasing its temperature, and sending to the third outlet 10e.

Preferably, the vehicle operative fluid flowing between the second inlet 10c and the second outlet 10d is used by a safety heat exchangers H', H'' configured, for instance, to avoid icing of condenser/evaporator housed in the first portion 10'.

Advantageously, the first temperature range value has a temperature greater than the second temperature range value that has a temperature greater than the third temperature range value.

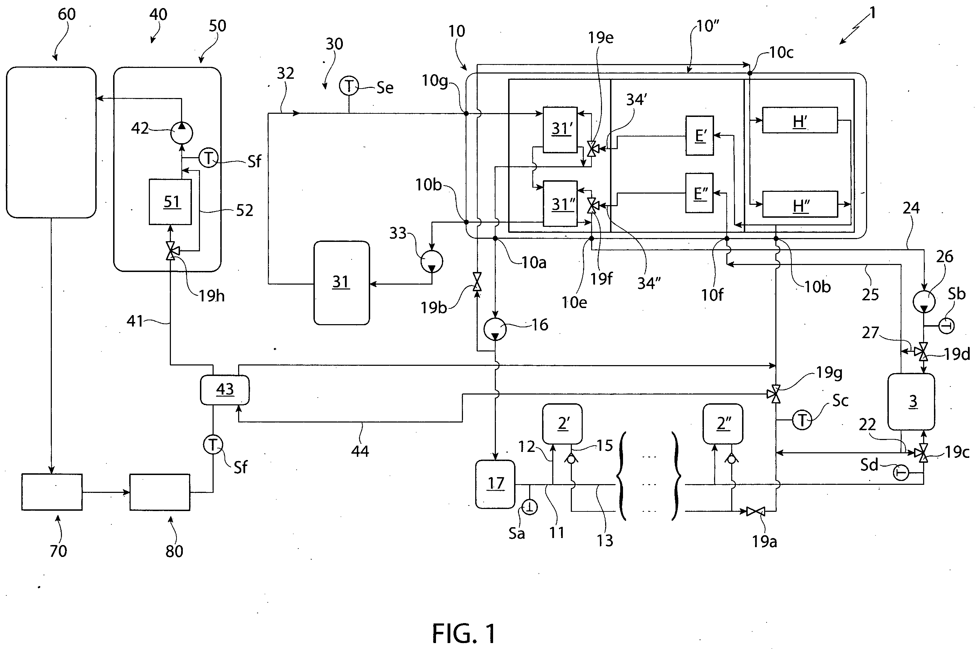

Making reference to figure 1, the first outlet 10a of the heat pump assembly 10 is fluidly connected by a first conduit 11 to heaters 2. Each heater 2 is connected to the first conduit 11 via a first support conduit 12. In the shown embodiment two heaters 2ⁱ to 2ⁿ is shown, where n can be a variable integer number..

Downstream, heaters 2 are fluidly connected to the first inlet 10b via a second conduit 13. Similar to the preceding, the second conduit 13 is fluidly connected to each heater 2 via a second support conduit 15.

The heat management system 1 further comprises first valve means 19a fluidly interposed on the third conduit 13 downstream to all heaters 2 in order to regulate the flow coming from these latter towards the heat pump assembly 10.

The heat management system 1 further comprises pumping means 16 configured to allow circulation of fluid through heaters 2, i.e. forcing fluid to flow from the heat pump assembly 10 towards heaters 2 via first conduit 11.

Advantageously, the heat management system 1 further comprises heating means 17, e.g. an electric heater, fluidly interposed downstream to pumping means 16 while upstream to all heaters 2 along first conduit 11.

It is further noticed that the second outlet 10c is fluidly connected to the second conduit 13 via a third conduit 14 downstream to pumping means 16.

Consequently, the heat management system 1 comprises a fourth conduit 18 fluidly connecting the first conduit 11 downstream to pump means 16 to the second inlet 10c. Furthermore, heat management system 1 comprises second valve means 19b configured to regulate the fluid passage between from the first conduit 11 towards the fourth conduit 18.

The first conduit 11 is furthermore fluidly connected to front heater/cooler 3. In detail, first conduit 11 is fluidly connected to front/heat cooler 3 via third valve means 19c. .

The front/heater cooler 3 is fluidly connected to the second conduit 13 via a fifth conduit 21. The third valve means 19c are furthermore configured to allow fluid connection to a sixth conduit 22 that allow fluid connection to fifth conduit 21 to the first conduit 11.

Heat management system 1 further comprises a seventh and eight conduits 24, 25 fluidly connecting respectively the third outlet 10e and the third inlet 10f to the front heater/cooler 3. The heat management system 1 further comprises pumping means 26 configured to make circulate the operative fluid within the seventh and eight conduits 24, 25.

The heat management system 1 further comprises fourth valve means 19d configured to regulate the flow in the seventh and eight conduits 24, 25. Furthermore, the seventh and eight conduits are connected by a second bypass conduit 27. Fourth valve means 19d are therefore configured to regulate the flow between the seventh and eight conduits24, 25.

The heat management system 1 further comprises a battery heat management portion 30, the battery heat management portion 30 comprises a exchange module 31 fluidly interposed in a circulation conduit 32 fluidly connecting batterymeans 4 to the exchange module 31 and representing a heat exchanger in vicinity of battery means or battery means themselves.

The battery heat management portion 30 further comprises pump means 33 configured to make operative fluid circulate within the circulation conduit 32.

The operative fluid circulating into battery heat management portion 30 may be advantageously a different fluid with respect to the one circulating the remaining portion of the heat management system 1, such as a non-conductive fluid.

The heat pump assembly 10 may comprise a temperature management module 10‴, as per the disclosed embodiment integrated with the first and second modules 10', 10" configured to allow exchange of heat between the circulation conduit 32 and the first and/or seven conduits 11, 24.

In detail for the present embodiment, the circulation conduit 32 passes through a fourth outlet 10g and a fifth inlet 10h of the heat pump 10.

The temperature management module 10‴ a first heat exchanger 31' and a second heat exchanger 31", the first heat exchanger 31' being placed downstream to the second heat exchanger 31" along circulation conduit 32. In detail, first and second heat exchangers 31', 31" are fluid-to-fluid heat exchangers.

In detail the heat management module 1 comprises a first exchange conduit 34' and a second exchange conduit 34'' respectively fluidly connecting the first and second heat exchangers 31', 31'' to the second portion 10'', in particular to fourth and fifth outlets 10g, 10h thereof, and to the sixth conduit 24 and the second conduit 13.

In detail, the first exchange conduit 34' and the second exchange conduit 34" are fluidly connected to respectively the sixth conduit 24 and the second conduit 13 via fifth and sixth valve means 19e, 19f configured to regulate the fluid passage between the respective conduits.

The heat management system 1 is furthermore configured to allow heat exchange between one of heaters 2, front heat exchanger 3 and/or battery module 30 with an operative system heat management portion 40.

In detail, the operative system heat management portion 40 comprises a further circulation conduit 41 configured to allow an operative fluid circulate within the further circulation conduit 41.

The operative fluid circulating into operative system heat management portion 40 may be advantageously a different fluid with respect to the one circulating the remaining portion of the heat management system 1.

The operative system heat management system 40 further comprises pump means 42 configured to make operative fluid circulate within the circulation conduit 41.

The operative system heat management system 40 comprises a heat exchanger 43 fluidly interposed in the circulation conduit 41 and configured to allow heat exchange with one of the conduits of the remaining portion of the heat management system 1, in detail with a spilling conduit 44 configured to spill fluid flowing in the aforementioned one of the conduits of the remaining portion of the heat management system 1.

In the disclosed embodiment, such spilling conduit 44 is configured to spill fluid from second conduit 13, in particular downstream to heaters 2 and via seventh valve means 19g.

The operative system heat management system 40 further comprises an operative module 50, 60, 70, 80 fluidly interposed on the circulation conduit 41 and configured to exchange heat with this latter, e.g. via a related heat exchanger.

With operative module 50, 60, 70, 80 is intended a module of the vehicle that is configured to carry out a specific operation while producing or using heat.

In particular, the operative module 50, 60, 70, 80 may be at least one among a transmission heat management system 50, a power electronics heat management system 60, a compressed air heat management system 70 or an e-axle heat management system 80.

In further detail, the transmission heat management system 50 comprises the elements voted to cool the driveline components of the vehicle, the power electronics heat management system 60 comprises the elements voted to cool the power electronic devices, the compressed air heat management system 70 comprises the elements voted to cool the compressor means generating compressed air and the e-axle management system 80 comprises the elements voted to cool down the e-axle components, such as the electric machines carried by this latter.

The disclosed embodiment discloses all such operative modules while only one or some of them may be present. The transmission heat management system 50 is described in detail for sake of brevity, being the remaining ones realized in a similar manner.

The transmission heat management system 50 comprises heat exchanger 51 fluidly interposed within circulation conduit 41 and configured to allow exchange of the transmission operative fluid with the operative fluid circulating in circulation conduit 41.

Preferably, transmission heat management system 50 may comprise a bypass conduit 52 fluidly bypassing the heat exchanger 51 and fluidly connected to the circulation conduit 44 via eight valve means 19h.

The heat management system 1 further comprises sensor means S configured to detect the temperature in some among the conduits of the heat management system 1.

The heat management system 1 further comprises an electronic control unit (not shown) electrically connected to the sensor means S, comprising elaboration means to elaborate such acquired values and control consequently the operation of at least some among the described valve means 19 and the heat pump assembly 10 to reach the desired temperature required by heat exchangers 2, 3, the battery module 30 or one among the operative modules 50, 60, 70, 80.

In the disclosed embodiment, the heat management module 1 comprises:
- First sensor means Sa configured to detect the temperature of the operative fluid downstream to pump means 16 and in particular to heater 17, if present;
- Second sensor means Sb configured to detect the temperature of the operative fluid downstream to pump means 26 and upstream the fourth valve.means 19d; and
- Third sensor means Sc configured to detect the temperature of the operative fluid in the second conduit 13 downstream to heaters 2 and downstream to the first valve means 19a.
- Fourth sensor means Sd configured to detect the temperature of the operative fluid within the first conduit 11 upstream to third valve means 19c;
- Fifth sensor means Se configured to detect the temperature of the operative fluid within battery module 30;
- Sixth sensor means Sf configured to detect temperature within and/or downstream to an operative module 50, 60, 70;
- Seventh sensor means (not shown) configured to detect the environmental temperature.

The operation of the above described embodiment of the invention is described below.

According to the need of the temperature required within the interior space of the vehicle, indeed preferably the cabin and/or the passenger space, the electronic control unit acquires data by sensor means S and control consequently operation of pump means 16, 26, of the valve means 19 and of the heat pump assembly 10 in order to provide cool or heated water to the respective heat exchangers 2, 3.

Control profile to control pump means 16, 26, of the valve means 19 and of the heat pump assembly 10 depends further on predetermined parameters related to the vehicle or to a chosen conditioning profile, stored in the electronic control unit. Being such relationship dependent on thermodynamic law and being variable according to the specific need, they will be no described into detail.

In particular, the heater 17 can be activated only in order to boost the already heated fluid coming through the first conduit 11. Similarly, heat pump assembly can avoid to send cooled fluid towards front heater/cooler 3.

Moreover, if there is need to cool/heat the battery means, battery module 30 is controlled by the electric control unit that further controls pump means 33, valves 19e, 19f to cool down or heat up the fluid into circulation conduit 32 in order to cool down or heat up the battery means 4.

Similarly, according to the need of an operative module 50, 60, 70, 80, pump means 42 and valve means related are controlled to make circulate the operative fluid within the further circulation conduit 41 and exchange heat with the spilling conduit 44.

In all the aforementioned embodiment the shown valve means are preferably electric controlled valve means and can be realized advantageously as proportional two-ways or three ways valves according to the shown topology of conduits where they are interposed.

Furthermore, heaters are advantageously configured as water-air heat exchangers wherein the air is the air of the internal space of the vehicle to be conditioned.

In view of the above, the present invention related to a method for managing a heat management system 1 as described above and comprising the following steps:
i. Acquire data via sensor means S related to a physical quantity indicative of a temperature of an operative fluid, a space and/or an operative system of the vehicle;
ii. Elaborate data at step i) together with a received target conditioning request related to a required temperature within the vehicle or of an operative system of the vehicle;
iii. Control consequently the pump means and valve means according to the elaboration at step ii).

In particular, the target condition request may be imparted by the user of controlled automatically on the base of other parameters acquired by the vehicle or the environment.

If present, the step iii) further foresees the control of the heat pump assembly 10.

In particular, it is noticed that the control is provided to regulate only the pump means, valve means and the at least one heat pump assembly i.e. can use the heat of the operative system/s only if these latter works in a condition that is useful to transmit heat.

In view of the foregoing, the advantages of a heat management system and a vehicle according to the invention are apparent.

Thanks to the above proposed heat management system is possible to provide a good level of conditioning within the internal space of the vehicle and of operative systems thereof with a reduced energy consumption.

Moreover, the proposed heat pump assembly can be used in for conditioning operative modules such as the transmission or the electric batteries.

Such use can be integrated into the conditioning of the internal space of the vehicle, thereby reducing costs for dedicated conditioning system and related elements and occupied space.

Indeed, it is possible to retrieve and use - if the operative range temperature of the operative modules allows - the heat generated by powertrain components to heat the vehicle.

Furthermore, such integration allows to improve the use of any source of heat in the vehicle thereby further increasing efficiency.

It is clear that modifications can be made to the described heat management system and vehicle which do not extend beyond the scope of protection defined by the claims.

For example, the topology of conduits, typology of valve and disposition of sensor means and their typology may vary.

Clearly, heaters can be of any typology and disposed in different number and location on the vehicle.

Furthermore, essentially, the heat management system is voted to use heat from the operative module towards the front cabin, accordingly any combination of further heaters or source of heat and heat management can be optional.

## Claims

1. Heat management system (1) for a vehicle provided with an heat exchanger (2, 3) configured to exchange heat with the air within an internal space of the vehicle (1), said heat management system (1) comprising an operative system heat management portion (40) fluidly connected to exchange heat to at least one heat exchangers (2, 3), wherein said operative system heat management portion (40) comprises at least one operative module, said operative module comprising a transmission heat management system (50)) and at least one among a power electronics heat management system (60), a compressed air heat management system (70) and/or an e-axle heat management system (80), wherein said operative system heat management portion (40) comprises a recirculation conduit (41) fluidly interposed said at least one operative module operative module (50, 60, 70, 80) of said vehicle and a heat exchanger (43) fluidly interposed on said recirculation conduit (41), said heat exchanger (43) being configured to allow heat transfer with a spilling conduit (44) spilling fluid from a conduit fluidly connected to said at least one said heat exchangers (2, 3).

2. Heat management system according to claim 1, further comprising pumping means (42) configured to make circulate an operative fluid within said recirculation conduit (41).

3. Heat management system according to any of the preceding claims, wherein said operative module (50, 60, 70, 80) comprises a heat exchanger (51) fluidly interposed within said recirculation conduit (41).

4. Heat management system according to claim 3, wherein said operative module (50, 60, 70, 80) comprises a bypass conduit (52) fluidly interposed in parallel to said heat exchanger (51).

5. Heat management system (1) according to any of the preceding claims, said heat management system (1) comprising a plurality of first heat exchangers (2) configured to heat the air within an internal space of said vehicle and at least one second heat exchanger (3) configured to heat/cool the air within said internal space, said heat management system (1) comprising a heat pump assembly (10) configured to heat up and/or cool down an operative fluid configured to flow with said heat exchangers (2, 3), said heat management system (1) further exchanging heat with said operative system heat management portion (40).

6. Heat management system according to claim 5, wherein said vehicle (1) comprises battery means to allow its operation, said heat management system (1) comprising a battery heat management portion (30) configured to exchange heat with said batteries and to exchange heat with at least one between said heat exchangers (2, 3), said heat pump assembly (10) and said operative system heat management portion (40).

7. Heat management system according to claim 5, wherein said at least one heat pump assembly (10) defines a first outlet (10a) configured to allow the exit of the operative fluid at a first temperature range value, a first inlet (10b) configured to allow the entrance of the operative fluid at a second temperature range value, a second inlet (10c) configured to allow the entrance of the operative fluid at the aforementioned first temperature range value and a second outlet (10d) configured to allow the exit of the operative fluid at the aforementioned second temperature range value.

8. Heat management system according to claim 7, wherein said at least one heat pump assembly (10) defines further defines a third outlet (10e) configured to allow the exit of the operative fluid at a third temperature range value and a third inlet (10f) configured to allow the entrance of the operative fluid at the aforementioned third temperature range value.

9. Heat management system according to any claims dependent on claim 5, comprising a first conduit (11) fluidly connecting said a first outlet (10a) of said heat pump (10) towards said first and second heat exchangers (2, 3) and a second conduit (13) fluidly connecting said first and second heat exchangers (2, 3) to a first inlet (10b) of said heat pump (10) and pump means (16) fluidly interposed on said first conduit (11) to pump fluid towards said at least one second heat exchanger (3), said spilling conduit (44) spilling operative fluid from one between said first and second conduits (11, 13).

10. Heat assembly according to claim 9, wherein said spilling conduit (44) spills fluid from said second conduit (13) downstream to said first heat exchanger (2).

11. Heat management system according to any of the preceding claims, comprising sensor means (S) configured to detect a physical quantity related to a temperature to be detected and an electronic control unit configured to acquire the data from said sensor means (S) and control consequently the heat exchange with said operative system heat management portion (40)

12. Heat management system according to any of the preceding claims, wherein said operative fluid is water.

13. Heat management system according to any of the preceding claims depending on claim 10, wherein said first conduit (11) is configured to pass through a heater (17) of said vehicle upstream to said first heat exchangers (2).

14. Heat management system according to any of the preceding claims dependent on claim 5, wherein said heat pump assembly is a CO2 heat pump assembly.

15. Method for managing a heat management system according to claim 11, comprising the following steps:
i. Acquire data via said sensor means (S) related to a physical quantity indicative of a temperature of an operative fluid, a space and/or an operative system of said vehicle;
ii. Elaborate data at step i) together with a received target conditioning request related to a required temperature within the vehicle or of an operative system of the vehicle;
iii. Control consequently said pump means and said valve means according to the elaboration at step ii).

16. Method according to claim 15, when claim 11 depends on claim 6, further controlling at step iii) said at least one heat pump assembly.

17. Vehicle defining an internal space for housing passengers and an operative system (50, 60, 70, 80) configured to perform a working operation of said vehicle, said vehicle being provided with a heat management system (1) according to any of the preceding claims.
